## Europäisches Patentamt
## European Patent Office
## Office européen des brevets

(19)

(11) Publication number: **0 100 756**

**A1**

(12)

# EUROPEAN PATENT APPLICATION

(21) Application number: **83830157.0**

(22) Date of filing: **27.07.83**

(51) Int. Cl.³: **F 16 H 55/56**

(30) Priority: **04.08.82 IT 2273682**

(43) Date of publication of application:
**15.02.84 Bulletin 84/7**

(84) Designated Contracting States:
**AT DE FR GB SE**

(71) Applicant: **SIT S.p.A.**
**Via Marconi 42**
**I-24012 Brembilla (Bergamo)(IT)**

(72) Inventor: **Scaglia, Mario**
**Via Nirone 10**
**Milan(IT)**

(74) Representative: **Calvani, Domenico**
**UFFICIO BREVETTI ING. CALVANI, SALVI & VERONELLI**
**4, Piazza Duca d'Aosta**
**I-20124 Milan(IT)**

(54) **Variable pitch pulley with continuous adjustment of the pitch circle diameter.**

(57) The variable pitch pulley is of the type having two opposed flanges (1,2) defining a groove (3) with inclined sides for receiving a V-belt. A flange (1) has an axial hub (4) provided with external thread (5) intended to receive the other flange (2) through an axial center (14) bore provided with internal thread (15). At least one of these threads (5, 15) is provided on two separate pieces (2, 6), thereby forming a small axial gap (13) therebetween and forcing means (9, 17) are provided for forcing said two pieces (2, 6) once said other flange (2) has been screwed on the first flange (1) in the axial desired position, which axially act on said threads (5, 15) so as to lock the two flanges (1, 2) in their desired mutual position, both under tension and under push forces.

FIG. 1

T I T L E

"VARIABLE PITCH PULLEY WITH CONTINUOUS ADJUSTMENT
OF THE PITCH CIRCLE DIAMETER"

Inventor: Mr.Mario Scaglia, an Italian citizen
          residing in Milan (Italy), Via Nirone, 10.

          Applicant: SIT S.p.A., Via Marconi, 42
          BREMBILLA,Bergamo, Italy.

The present invention relates to variable pitch
pulleys and more particularly a pulley of this kind, which
is capable of giving a continuous adjustment of the axial
position of the two flanges forming part thereof.

These pulleys generally are comprised of two opposed
flanges with inclined sides defining a groove therebetween,
one of the flanges being fixed and having an axial hub provided with external thread and the conventional bore for
coupling this flange to a driving shaft, whereas the other
flange is movable and screwed on the fixed flange hub
through an axial bore provided with internal thread. The
movable flange is provided with threaded holes for receiving
a dowel .. intended to lock it in the desired position.
The threaded hub is provided with a pair of opposite flats
or keyways so as to permit the movable flange to be locked
in the desired position by means of dowels or keys.
However, such pulleys have the drawback that the adjustment
of their pitch diameters is necessarily effected by angular
movements of 180°, so that there is not the possibility to have a positioning of the movable flange in any desired
location along the hub of the fixed flange (continuous
adjustment).

Furthermore, as another drawback, these pulleys require
time consuming and accurate machining operations in order
to provide the keyways or the threaded holes or the flats
for locking the movable flange to the fixed flange.

A variable pitch pulley has been also proposed
(Austrian Patent No.346,139) wherein the movable flange
can be locked to the fixed flange hub by means of screws
screwed into threaded holes extending parallel to the pulley axis, each hole being formed of two halves of which the
one is located in the movable flange and the other in the
fixed flange hub.

Since at most three axial holes are provided, which
are spaced to each other of 120°, in order to not excessively lighten the flanges, which would adversely affect
the strenght thereof, also in this case an adjustment of
the pulley pitch diameter by angular movement of 120° would
result and therefore it would be impossible to have a continuous and fine adjustment of the pulley.

In order to avoid the above mentioned drawbacks, namely
the movable flange adjustments by angular movements of 180°
or 120°, the present invention proposes a variable pitch
pulley of the above mentioned kind, which is characterized
in that at least one of the threads is provided on two separate pieces intended to be spread apart or approached so
as to form a gap therebetween, thread forcing means being
provided for mutually loading said pair of separate pieces
once the movable flange has been screwed on the fixed flange hub up to the predetermined axial position, which axially act on the threads in opposite directions so as to lock the two flanges in the desired mutual positions.

Advantageously, these two pieces are comprised of the movable flange and a movable ring inserted in a recess of said movable flange, provided around the axial center bore, receiving the hub.

Preferably, the thread forcing means are formed of at least two screws to be engaged into corresponding through holes provided at equal spaced locations on the movable flange and into corresponding axial threaded holes provided in the movable ring.

Alternatively the thread forcing means comprise at least two screws to be engaged into corresponding threaded axial holes provided at equal spaced locations in the movable flange and into corresponding axial blind holes provided in the movable ring.

Furthermore, the thread forcing means comprise. at least two screws to be engaged into corresponding axial threaded holes provided at equal spaced locations in the movable flange and intended to exert a push-action against the movable ring, each of the confronting surfaces of movable ring and flange being provided of a small blind hole intended to receive a pin preventing the rotation of one piece with respect to the other piece.

Advantageously, the thread on the two pieces forming it is provided by connecting to each other such pieces and then threading the axial bore of the movable flange with these pieces in close abutting relationship to each other so as to have an uninterrupted thread.

Suitably, the forcing of the threads occurs by screwing the movable flange together with the ring on the hub up to the desired location, then loosening the screws and causing the ring or the movable flange to angularly rotate along the hub thread until the corresponding screw receiving holes are again in register with each other, thereby forming a gap between the inner ring surface and the inner recess surface having the same wide as the thread pitch fraction the ring has rotated, screwing again the screw into the corresponding holes now in register and tighte-ning them in order to lock the movable flange in the desired position by axially forcing the threads.

The present invention will be now described in more detail in connection with some preferred embodiments thereof, given merely by way of example and therefore not intended in a limiting sense, illustrated in the accompanying drawings, wherein:

Fig.1 is a front half-sectioned view of a first embodiment of the variable pitch pulley according to the invention;

Fig.2 is a front exploded view of the pulley of Fig.1;

Fig.3 is a partial section taken along the line III-III of Fig.1;

Fig.4 is a view similar to Fig.1, showing a second embodiment of the pulley according to the invention;

Fig.5 is a view similar to Fig.1, showing a third embodiment of the pulley according to the invention;

Fig.6 is a view similar to Fig.1, showing a fourth

embodiment of the pulley according to this invention.

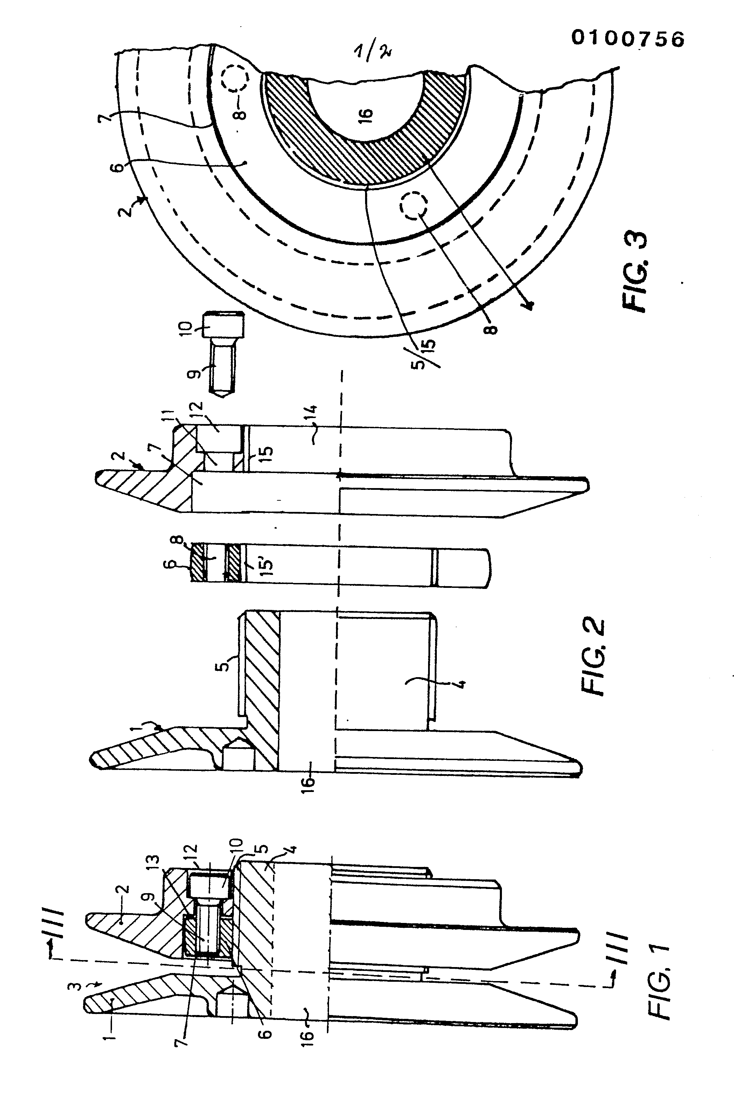

As can be seen from Fig.1 to 3, the variable pitch pulley includes a fixed flange 1 having an inclined side and a hub 4 perpendicularly extending from its center portion and provided with an external thread 5 and a bore 16 for receiving a conventional driving shaft. Screwed on this hub 4 in a movable flange 2 having also an inclined side which cooperates with the inclined side of fixed flange 1 so as to define a groove 3 for receiving a V-belt (not shown).

The movable flange 2 has an axial center bore 14 provided with internal thread 15 and is secured on the hub 4 of the fixed flange so as to obtain the axial distance between the flanges necessary for the desired transmission ratio. For this purpose the movable flange 2 must be secured and locked on the hub 4 as firmly as possible to avoid loosening dangers. To lock the movable flange 2 of the thread 5 of the hub 4, this flange 2 is provided on its inner side with a recess 7 opening at the axial bore 14 having an internal thread and intended to receive the threaded hub 4.

Placed in the recess is a ring 6 having the same inner diameter as that of the bore 14 and extending along all the inner circumference of recess 7 and the inner surface of which is provided with a thread 15' having the same pitch as the thread 15 of bore 14, and intended to form the continuation thereof. The ring 6 has three axial threaded holes 1, each hole 8 being intended to receive the threaded stem of a screw 10. Each screw 10 extends through a corresponding axial through hole 11 provided in the movable flange 2. The three axial threaded holes 8 of ring 6 and the three axial through holes 11 of the movable flange 2 are spaced apart 120°, whereas the head of screw 10 is inserted in a suitable seat 12 provided in the external side surface of the movable flange 2.

In order to obtain a continuous internal thread in the axial center bore 14 formed partially by the movable flange 2 and partially by the ring 6, the latter is first tightened into the recess 7 in direct contact with the movable flange 2 by means of screws 10 and then the axial bore so formed is tapped so as to obtain the threads 15,15' continuously provided on the movable flange 2 and the ring 6.

In this condition the movable flange is screwed on the hub 4 up to the desired position. Then, the screws are removed and the ring 6 is rotated of 120° by means of a tool fitted into the through hole 11, i/e/ until the next holes 8 of ring 6 are again in register with the corresponding through holes 11 of the movable flange 2. At this point between the ring 6 and the inner surface of recess 7 a gap 13 will be formed having a wide corresponding to one third of the thread pitch. Once this operation is terminated, the screws 10 are again inserted into the holes 11 of the movable flange and are tightened into the threaded holes 8 of the ring 6. In this manner the ring 6 will be in a tension relationship with the movable flange 2, resulting in a forcing action between the threads 15,15' of the axial bore 14 formed of the flange 2 - ring 6 assembly  and the threads 5 of hub 4, so that the movable flange will remain locked in the desired position.

When this locking operation of the movable flange
2 to the ring 6 has been performed for the first time,
each further adjustment of the distance between fixed
flange 1 and movable flange 2 is of extreme simplicity.
It will be sufficient to loosen the screws 10 so as to
remove the forced  restrain between the threads and
then to rotate clockwise or counterclockwise the movable flange 2 together with the ring 6 secured thereto
until the new desired position has reached and then to
tighten again the screws 10 in order that the movable
flange 2 is firmly locked in this new position.

In this manner there is an affidable lock of the
movable flange 2 in any desired position along the
thread 5 of hub 4, thereby resulting in a continuous
adjustment of the flange spacing which therefore is
not bound to a stepwise rotation of the movable
flange 2.

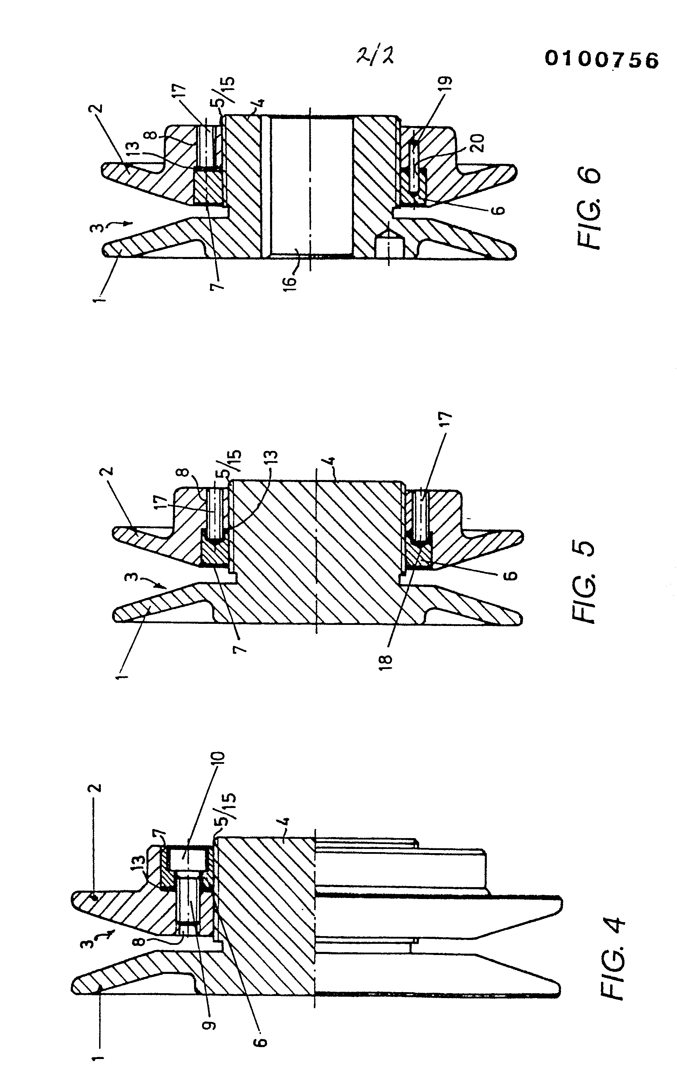

Fig. 4 illustrates another embodiment of the pulley according to the invention in which the recess 7
receiving the movable ring 6 is provided on the outer
side surface of the movable flange 2, which is provided
with the three equally spaced threaded holes 8 receiving
the stems 9 of the tightening screws 10, the heads of
which are enclosed into the movable ring 6, which is
provided with three equally spaced through holes. In this
embodiment there is again a forcing action between the
threads 5, 15, originated by an axial tension between
ring 6 and movable flange 2, so that the locking  action
occurs as in the embodiment of Figs.1-3.

Fig. 5 illustrates another embodiment, in which the
ring 6 is placed in the recess 7 provided on the inner surface of the movable flange 2 and is provided with
three blind holes 18 while the movable flange 2 is provided with three threaded holes in which threaded dowels 17 are screwed. In this embodiment the forcing
action between the threads 5, 15 occurs by the axial
push force exerted by the dowels 17 against the bottoms of the blind holes 18 of the movable ring 6,
during the screwing thereof.

Fig.6 illustrates a further embodiment wherein
the ring 6 is placed in the recess 7 provided on the
inner surface of the movable flange 2 and has an axial
hole 20 of small dimensions, intended to partially re-
reive a pin 19, which is partially inserted in a corresponding small hole axially provided in the movable
flange 2 so that these holes are confronting when the
ring 6 is positioned with respect to the fixed flange
with the small gap 13 therebetween. The movable ring 6
does not present other axial holes while the movable
flange 2 is provided with the three axial threaded holes 8 in which the dowels 17 are screwed. The forcing
action of the threads 5, 15 occurs in this case by the
axial push action exerted by the dowels 17 against the
ring. Since, when the dowels 17 are loosened to be able
of positioning the movable flange 2 relative to the
fixed flange 1, they are no longer in engagement with
the ring 6 the above mentioned pin 19 is provided for
the purpose to rotate the ring 6 and the movable flange
2 together while maintaining the axial gap 13 therebetween
unchanged.

While the invention has been only illustrated and described in c-onnection with several preferred embodiments thereof, it is apparent that various changes and
modifications can be made thereto by those skilled in
the art without departing from the scope of the invention.

# C L A I M S

1. Variable pitch pulley of the type having a pair of opposite flanges defining with their inclined sides a groove for receiving a V-belt, of which a flange is fixed and has an axial hub provided with external thread and the conventional bore for receiving a driving or driven shaft and the other flange is movable and screwed on the fixed flange hub through an axial bore provided with internal thread, characterized in that at least one of the threads is provided on two separate pieces intended to be spread apart or approached so as to form a gap therebetween, thread forcing means being provided for mutually loading said pair of separate pieces once the movable flange has been screwed on the fixed flange hub up to the predetermined axial position, which axially act on the threads in opposite directions so as to lock the two flanges in the desired mutual positions.

2. Variable pitch pulley according to claim 1, characterized in that said two pieces are comprised of the movable flange and a movable ring inserted in a recess of said movable flange, provided around the axial center bore receiving the hub.

3. Variable pitch pulley according to claim 2, characterized in that said ring receiving recess is provided on the inner side surface of the movable flange.

4. Variable pitch pulley according to claim 2, characterized in that said ring receiving recess is provided on the outer side surface of the movable flange.

5. Variable pitch pulley according to claim 1 or 2, characterized in that said thread forcing means are formed of at least two screws to be engaged into corresponding through holes provided at equal spaced locations on the movable flange and into corresponding axial threaded holes provided in the movable ring.

6. Variable pitch pully according to claim 1 or 2, characterized in that said thread forcing means comprise at least two screws to be engaged into corresponding threaded axial holes provided at equal spaced locations in the movable flange and into corresponding axial blind holes provided in the movable ring.

7. Variable pitch pulley according to claim 1 or 2, characterized in that said thread forcing means comprise at least two screws to be engaged into corresponding axial threaded holes provided at equal spaced locations in the movable flange and intended to exert a push-action against the movable ring, each of the confronting surfaces of movable ring and flange being provided of a small blind hole intended to receive a pin preventing the rotation of one piece with respect to the other piece.

8. Variable pitch pulley according to one of the preceding claims, characterized in that said thread on the two pieces forming it is provided by connecting to each other such pieces and then threading the axial bore of the movable flange with these pieces in close abutting relationship to each other so as to have an uninterrupted thread.

9. Method of locking for the first time said movable flange to the fixed flange of a pulley according to one of the preceding claims, characterized in that said forcing of the threads occurs by screwing the movable flange together with the ring on the hub up to the desired location, then loosening the screws and causing the ring or the movable flange to angularly rotate along the hub thread until the corresponding screw receiving holes are again in register with each other, thereby forming a gap between the inner ring surface and the inner recess surface having the same wide as the thread pitch fraction the ring has rotated, screwing again the screw into the corresponding holes now in register and tightening them in order to lock the movable flange in the desired position by axially forcing the threads.

10. Method of locking for the second and subsequent times the movable flange to the fixed flange of a pulley according to claims 1-8, characterized by loosening the forcing screws until the retaining action between said threads is released and by rotating said movable flange together with the so positioned ring to the screws.

FIG. 1

FIG. 2

FIG. 3

1/2

0100756

2/2      0100756

FIG. 6

FIG. 5

FIG. 4

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-U-1 687 280 (A. WIEBEL) <br> * Claim; figures 1, 2 * | 1,8 | F 16 H 55/56 |
| X | US-A-3 043 151 (H.R. KEEPERS) <br> * Complete document * | 1,5,10 | |
| A | | 2,9 | |
| A | FR-A-1 112 581 (M. ROUX) <br> * Complete document * | 1,6,10 | |
| A | US-A-2 890 592 (H.R. KEEPERS)- <br> * Complete document * | 1,2,5, <br> 9,10 | |
| D,A | AT-B- 346 139 (H. LANGESEE) | | TECHNICAL FIELDS SEARCHED (Int. Cl. ³) |
| A | US-A-3 132 529 (K.C. HAUBENESTEL) | | F 16 H 55/00 |

The present search report has been drawn up for all claims

| Place of search <br> BERLIN | Date of completion of the search <br> 16-09-1983 | Examiner <br> LEMBLE Y.A.F.M. |
|---|---|---|